# EUROPEAN PATENT SPECIFICATION

(11) **EP 2 540 571 B1**
(45) Date of publication and mention of the grant of the patent: **20.08.2014**
(21) Application number: 10846665.7
(22) Date of filing: 25.02.2010
(51) Int. Cl.: B60R 1/00, B60R 1/08

(54) **LEFT/RIGHT REARVIEW DEVICE FOR A VEHICLE**
LINKE/RECHTE RÜCKBLICKVORRICHTUNG FÜR EIN FAHRZEUG
DISPOSITIF DE RÉTROVISEUR GAUCHE/DROIT POUR VÉHICULE

(30) Priority: 24.02.2010 KR 20100016530
(43) Date of publication of application: 02.01.2013
(73) Proprietor: Cho, Sung-Ho, Seoul 137-853 (KR)
(72) Inventor: Cho, Sung-Ho, Seoul 137-853 (KR)
(74) Representative: Garavelli, Paolo
(86) International application number: PCT/KR2010/001170
(87) International publication number: WO 2011/105638

(56) References cited:
- WO-A1-2008/026842
- KR-A- 20070 007 225
- KR-B1- 100 650 126
- KR-U- 19980 013 900
- KR-Y1- 200 442 841
- US-B1- 7 057 500

## Description

### BACKGROUND

### 1. Field

The present disclosure relates to a side-view and rearview apparatus for a vehicle which may be simply and conveniently employed in place of a conventional rearview mirror. In particular, the present disclosure relates to a side-view and rearview apparatus including a camera 14 to image a side-view and rearview around the vehicle; a monitor 12 to display the side-view and rearview from the camera; a control unit to enable the side-view and rearview from the camera to be displayed on the monitor; and a body 10 to accommodate the camera, monitor and control unit, the body being installed at a front portion of left and/or right front doors of the vehicle. The present apparatus is fixed at a corner 100 in front of a glass window of the front door. Thus, the present apparatus may secure the side-view and rear view with a maximum degree using state-of-art electronic technologies and at the same time may be easily employed in place of the conventional rearview mirror for a vehicle.

### 2. Description of related art

Generally, a side-view and rear-view around a vehicle is secured using left and right rearview mirrors fixed outside the vehicle in a protrusion manner therefrom. The right and left rearview mirrors are constructed such that a tilt thereof is adjusted from the inside of the vehicle based on a physical height of a driver to provide the driver with an optimal side-view and rearview around the vehicle.

However, for such conventional rearview mirrors, in order to see the left and right mirrors, the driver should spend a little time which otherwise may be used to see an area in front of the vehicle and also rotate his/her head toward the mirrors, frequently leading to car accidents. Further, the rearview mirror has inherently a blind spot due to its physical limit. Moreover, since the rearview mirror is located outside the vehicle, the rearview mirror may suffer from external water, humidity, dirt, frost, or the like, resulting in difficulty for securing the view around the vehicle.

The document WO 2008/026842 discloses a vehicle according to the preamble of claim 1.

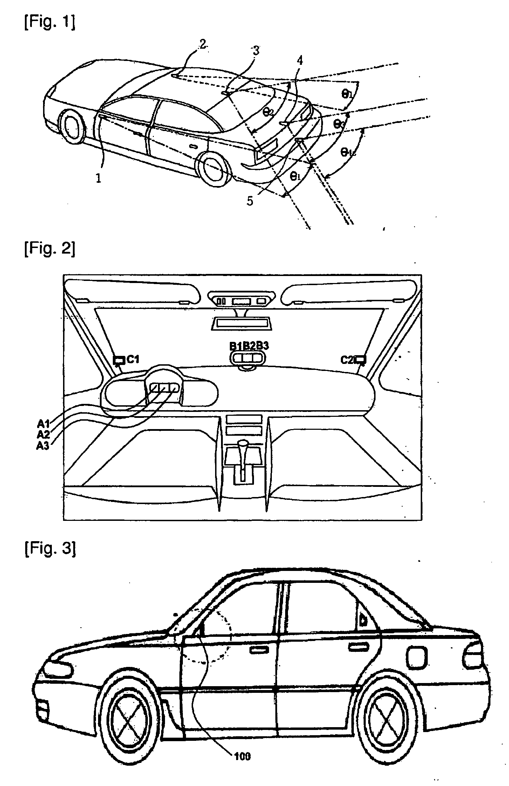

In dealing with these problems of the rearview mirror, Korean patent application number 2005-0001017 discloses a side-view and rear-view sensing system for a vehicle as shown in FIG. 1.

As shown in FIG. 1, the side-view and rear-view sensing system employs a plurality of cameras 1, 2, 3 ,4 and 5 installed in front of left and right front glass windows, on an outer top of the vehicle, and on a rear portion of the vehicle respectively with removing the rearview mirrors. Thus, the side-view and rear-view sensing system may obtain the side-view and rearview around the vehicle on real time.

Further, the side-view and rear-view sensing system may include a speed sensitive controller electrically connected to a rear camera to selectively allow one of the plurality of the cameras to operate depending on driving speed of the vehicle detected by a sensor. The side-view and rear-view sensing system may also include a monitor to display the images obtained from the plurality of the cameras.

Such a side-view and rear-view sensing system may secure the side-view and rearview around a vehicle using the cameras installed at rear and side portions in place of the conventional left and right rearview mirrors. As shown in FIG. 2, the monitor to display the images obtained from the plurality of the cameras may be incorporated in an instrument panel in front of a driver seat (A1, A2, A3); may be fixed onto a dash board in front of the driver seat (B1, B2, B3); and/or may be appropriately installed at both sides of a frame pillar trim (C1, C2). The driver may check outside situations by seeing the monitor during drive.

However, such a side-view and rear-view sensing system may be problematic in that the plurality of the cameras should be installed at various locations outside of the vehicle and thus the vehicle frame should be deformed for installation of the cameras. Further, since the plurality of the cameras installed at various locations and the monitor installed independently from the cameras as mentioned above should be connected with each other via electrical wires, the installation thereof may be difficult and time-consuming and need elaborate skills. Further, since the cameras and monitor are located far from each other, not only the installation thereof may be difficult but also the maintenance thereof may take much effort.

In case of such a side-view and rear-view sensing system, the driver by him/her self should judge and cope with various images sent from the plurality of the cameras. Further, due to the complexity of the system, the driver should learn many kinds of functions and associated operation buttons, so that it takes much effort and time for the driver to be familiar and feel comfortable with the system and thus to be absorbed in driving the vehicle. Such complexity of the system may cause un-safety and inconvenience for the vehicle depending on the driver type.

Further, using such a side-view and rear-view sensing system, the driver may keep on seeing only an area in front of the vehicle. In this way, when the driver keeps on seeing only the same area during drive, the driver may easily get sleepy. Therefore, using such a side-view and rear-view sensing system may lead to a car accident.

### SUMMARY

In consideration of the foregoing, the present disclosure provides a side-view and rearview apparatus for a vehicle which may be easily installed at the vehicle without deforming the appearance of the vehicle and may not take much installation effort and time, and may be easy for the driver to maintain and operate.

The present disclosure provides a side-view and rearview apparatus for a vehicle which may greatly improve sensing of the view around the vehicle using a camera and monitor and may be directly applied to a new vehicle or may be easily employed at the used vehicle by removing the rearview mirror and adding the same in place of the mirror. To this end, the present apparatus includes an integration of the monitor, the camera and a control unit to control them. This integration may be realized in one manner in which the monitor, the camera and the control unit are integrated into one body which in turn is shipped or distributed; and in the other manner in which camera and monitor housings, either thereof including the control unit, are separately shipped or distributed and then are fixed to a metal support plate 30 installed at a corner 100 in front of a glass of the front door.

The configuration of the present apparatus may be simple and thus any kind of the driver may easily learn installation, operation and maintenance thereof. Moreover, the present apparatus may provide an opportunity that the driver departs from keeping on seeing an area in front of the vehicle to slightly rotate his/her head toward left and/or right sides. This may avoid the driver from getting sleepy during drive.

The present invention provides a vehicle with a side and rearview apparatus, the apparatus comprising:
a camera (14) to image a side-view and rearview around the vehicle; a monitor (12) to display the side-view and rearview from the camera; a control unit to enable the side-view and rearview from the camera to be displayed on the monitor; and a body (10) to accommodate the camera, monitor and control unit, the body being installed at the front portion of left and/or right front doors of the vehicle,
the vehicle being characterized in that the body (10) comprises a camera housing (13) and a monitor housing (11) to receive therein the camera (14) and monitor (12) respectively, wherein the camera housing (13) and the monitor housing (11) are disposed to sandwich the front door therebetween so that the camera housing (13) and the monitor housing (11) are located outside and inside the vehicle respectively.

In one embodiment, the body 10 is formed of an integration of camera and monitor housings 13 and 11 being installed outside and inside the vehicle respectively, the camera housing including the camera and having a lens hole for a lens of the camera to see through, and the monitor housing including the monitor and having a cavity formed therein to receive the monitor.

In one embodiment, the integration of the camera and monitor housings 13 and 11 is accomplished using a bolt and a nut or via a metal support plate 30 installed to a corner 100 in front of a glass window of the front door.

In one embodiment, the body 10 has a glass slide portion 16 formed between the camera and monitor housings 13 and 11 to enable vertical sliding of a glass window of the front door.

In one embodiment, the camera and monitor housings 13 and 11 independently move in up-down, left-right and/or front-rear directions via operation of a driver.

In one embodiment, the movement of the camera and monitor housings 13 and 11 is realized via a hinge by a hand or an electrical mechanism.

In one embodiment, the camera housing 13 has a direction indication lamp formed at an outer cover thereof, and has an illumination lamp formed at a bottom face thereof.

In accordance with the present disclosure, the view angle for the driver may be enlarged with a maximum level by moving the camera housing (thus, changing a view direction of the camera) and the monitor housing (thus, changing a display direction of the monitor) in up-down, left-right and/or front-rear directions. Thus, the driver may secure a more wide-range view angle toward a side and rear around the vehicle compared to the conventional rearview mirror during drive, thereby achieving considerable drive safety improvement.

In accordance with the present disclosure, unlike the prior art side-view and rear-view sensing system as shown in FIG. 1, all of the components such as the camera, monitor and control unit are integrated into a single body which in turn is shipped; alternatively, the camera housing and monitor housing are separately manufactured and shipped and then are integrated with each other via a bolt and nut or via a metal support plate. Thus, the present apparatus may be simple and easy to install and maintain. Further, productivity thereof may improve.

In accordance with the present disclosure, unlike the prior art side-view and rear-view sensing system as shown in FIG. 1, the camera and monitor are adjacent to each other and hence only small amount or none of an electrical wire to connect them each other may be consumed, and necessary parts of the apparatus may be simplified and easy to assemble, leading to noticeable reduction of the product cost.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a conceptual view for illustrating installation positions for cameras in a side-view and rearview acquisition system for a vehicle according to a conventional art;
FIG. 2 is a conceptual view for illustrating installation positions for monitors in a side-view and rearview display system for a vehicle according to a conventional art;
FIG. 3 illustrates an installation position for a general rearview mirror for a vehicle, at which a side-view and rearview apparatus for a vehicle according to the present disclosure is disposed;
FIG. 4 is a perspective view of a side-view and rearview apparatus for a vehicle according to the present disclosure which is, as an example, installed at a left side of the vehicle;
FIG. 5 is a conceptual view for illustrating an engagement between a body of a side-view and rearview apparatus according to the present disclosure and a window of a left front door, as an example, of the vehicle;
FIG. 6 is a conceptual view for illustrating a position of a metal support plate used to install a side-view and rearview apparatus according to the present disclosure; and
FIG. 7 is a conceptual view for illustrating a state in which a side-view and rearview apparatus according to the present disclosure is installed at the vehicle.

### DETAILED DESCRIPTION

Reference will now be made in detail to embodiments, examples of which are illustrated in the accompanying drawings. However, the present disclosure may be embodied in many different forms and should not be construed as limited to the embodiments set forth herein. Rather, these embodiments are provided so that this disclosure will be thorough and complete, and will fully convey the scope of the disclosure to those skilled in the art. The present disclosure is defined only by the categories of the claims. In certain embodiments, detailed descriptions of device constructions or processes well known in the art may be omitted to avoid obscuring the disclosure by a person of ordinary skill in the art. Wherever possible, the same reference numbers will be used throughout the drawings to refer to the same or like parts.

Spatially-relative terms such as "below", "beneath", "lower", "above", or "upper" may be used herein to describe one element's relationship to another element as illustrated in the figures. It will be understood that spatially-relative terms are intended to encompass different orientations of the device in addition to the orientations depicted in the figures. For example, if the device in one of the figures is turned over, elements described as "below" or "beneath" other elements would then be oriented "above" the other elements. The exemplary terms "below" or "beneath" can, therefore, encompass both an orientation of above and below. Since the device may be oriented in another direction, the spatially-relative terms may be interpreted in accordance with the orientation of the device.

The terminology used in the present disclosure is for the purpose of describing particular embodiments only and is not intended to limit the disclosure. As used in the disclosure and the appended claims, the singular forms "a", "an" and "the" are intended to include the plural forms as well, unless context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, the thickness or size of each layer is exaggerated, omitted, or schematically illustrated for convenience of description and clarity. Also, the size or area of each constituent element does not entirely reflect the actual size thereof.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

Hereinafter, embodiments will be described in detail with reference to the drawings.

As used in herein, a term "side-view and rearview apparatus" for a vehicle refer to an apparatus for acquiring and displaying side-views and rearview with respect to the vehicle.

FIG. 3 illustrates an installation position for a general rearview mirror for a vehicle, at which a side-view and rearview apparatus for a vehicle according to the present disclosure is disposed. Usually, rearview mirrors for a vehicle are respectively installed at left and right front doors adjacent to driver and assistant seats so as to move in association with opening/closing of the front doors. For most of vehicles, a rearview mirror is disposed at a corner 100 in front of a window of a front door nearby a driver seat. As shown in FIG. 3, a side-view and rearview apparatus according to the present disclosure is also installed the corner 100 in front of the window of the front door at a driver seat.

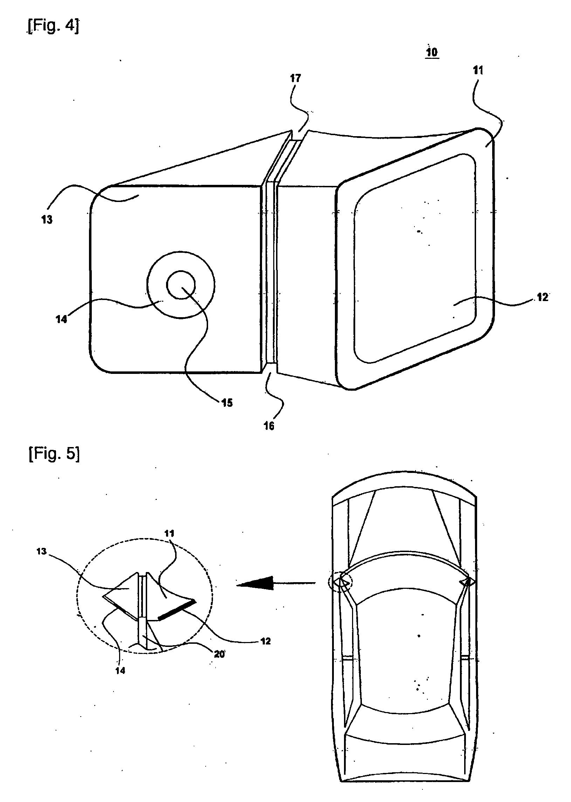

FIG. 4 is a perspective view of a side-view and rearview apparatus for a vehicle according to the present disclosure which is, as an example, installed at a left side of the vehicle. A configuration of the side-view and rearview apparatus instated at the left side of the vehicle is equally applied to a side-view and rearview apparatus installed at a right side of the vehicle except for a relative position between monitor and camera housings. Thus, herein, only the side-view and rearview apparatus installed at a right side of the vehicle will be described in details, but the side-view and rearview apparatus installed at a right side of the vehicle will not be described.

As shown in FIG. 4, a body 10 of the side-view and rearview apparatus according to the present disclosure is formed of monitor and camera housings 11 and 13 integral with each other. In one embodiment, if necessary, the monitor and camera housings 11 and 13 may be separated from each other. In one embodiment, the body 10 may accommodate therein a camera, a monitor, a control unit or the like and may be a single body where the monitor and camera housings 11 and 13 may be not separated from each other.

The side-view and rearview apparatus according to the present disclosure may be installed at a corner of the front door near an instrument panel and adjacent to a glass window, that is, the corner 100 in front of the glass window of the frond door nearby the driver seat. Thus, in one embodiment, at a middle region of a side face, adjacent to the glass window, of the body 10, a glass slide portion 16 is formed as a vertical guide groove so as to enable vertical sliding of the glass window 20 along the same. In one embodiment, the middle region may be located between the monitor and camera housings 11 and 13.

In one embodiment, at a middle region of a top face of the body 10, a door frame insertion portion 17 is formed as a horizontal groove so as to receive a front door frame therein. The door frame insertion portion 17 is engaged with a frame of the front door nearby the driver seat or with a finishing plate (not shown) extending from the fame, thereby tightly fixing the side-view and rearview apparatus to the corner 100 in front of the window glass.

FIG. 5 is a conceptual view for illustrating an engagement between the body of the side-view and rearview apparatus and the window of the left front door, as an example, of the vehicle. In a left portion of FIG. 5, the engagement between the glass guide portion 16 and the glass window or glass 20 is shown in an exaggerated fashion while the vertical guide portion 16 appears in a horizontal manner. As shown in FIG. 5, the glass 20 is vertically slidably engaged with the glass guide portion 16 of the body 10. Thus, a left portion of the body 10 with respect to the glass 20 is located at an outer side of the front door nearby the driver seat, in other words, is outside of the vehicle, while a right portion of the body 10 with respect to the glass 20 is located at an inner side of the front door nearby the driver seat, in other words, is inside of the vehicle.

As shown in FIG. 4 and FIG. 5, the left portion of the body 10 includes the camera housing 13 which is outside of the vehicle, while the right portion of the body 10 includes the monitor housing 11 which is inside of the vehicle. As stated above, the body 10 may be divided to the monitor and camera housings 11 and 13. In this case, an electrical wire (not shown) may connect a camera 14 and a monitor 12 each other using a connector (not shown) so as to achieve signal communications therebetween. In one embodiment, the camera and monitor housings 13 and 11 are integrally combined with each other.

Such integration between the camera and monitor housings 13 and 11 may be accomplished using two following manners. As a first way, the camera and monitor housings 13 and 11 are assembled respectively and are combined in an integrated manner before installing the same at the vehicle. In this case, when installing the same at the vehicle, the integrated structure is inserted in a space formed at the corner 100 in front of the glass of the front door and then is tightly secured to the frame of the front door. At this time, a gap generated at an upper portion of the space is filled by inserting a prepared finishing plate (not shown) into the door frame insertion portion 17 of the body 10, thereby achieving a tight fixation between the body 10 and the front door frame.

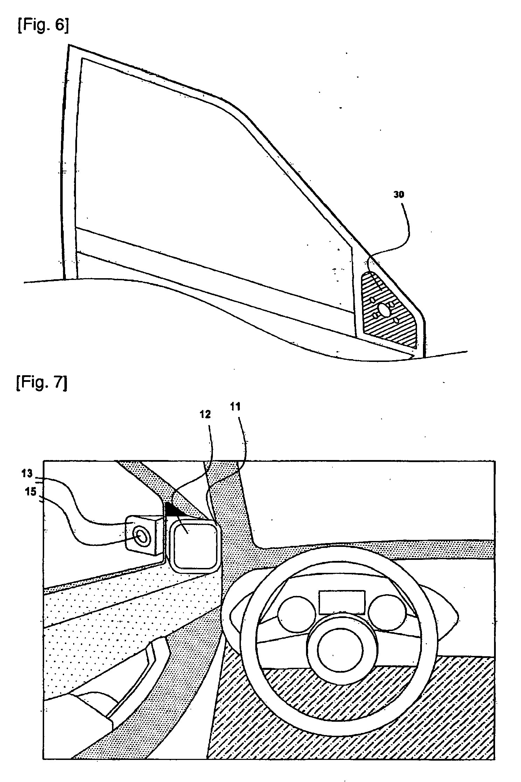

As a second way, the camera and monitor housings 13 and 11 may be integrally combined with each other via a metal support plate 30 installed at the corner 100 in front of the glass of the front door, as shown in FIG. 6.FIG. 6 is a conceptual view for illustrating a position of the metal support plate 30 used to install the side-view and rearview apparatus according to the present disclosure.

For most of vehicles, the metal support plate 30 is installed at the corner 100 in front of the glass of the front door, as shown in FIG. 6. In this case, the camera housing 13 is combined to the metal support plate 30 at the outside of the vehicle using bolts and nuts, and, subsequently, the monitor housing 11 is combined to the metal support plate 30 at the inside of the vehicle using a hook, a latching protrusion (not shown) formed at the metal support plate 30, a welding, an adhesive agent, bolts and nuts, and/or a combination thereof. Thus, the side-view and rearview apparatus according to the present disclosure is tightly fixed to the corner 100 in front of the glass of the front door.

The camera housing 13 forming the left portion of the body 10 has the camera 14 mounted thereto. The camera housing 13 is constructed to be combined in a hinge manner so as to move in upper-lower, left-right and/or front-rear directions using a hand or an electrical mechanism. Accordingly, the camera 14 changes its view direction. The camera housing 13 has a lens hole formed at a front portion thereof so that a lens 15 of the camera 14 sees through the same. If necessary, the camera 14 has a zooming function. The camera lens 15 is manually or automatically adjusted in terms of the view direction so as to be aligned with the lens hole formed at the front portion of the camera housing 13 and thus to image an external object. In one embodiment, the lens hole may be constructed to protect the lens 15 from weather conditions such as rain or snow or external impacts. In one embodiment, if necessary, the camera housing 13 has a direction indication lamp formed at an outer cover thereof and an illumination lamp formed at a bottom face thereof.

FIG. 7 is a conceptual view for illustrating a state in which the side-view and rearview apparatus according to the present disclosure is installed at the corner 100 in front of the glass of the front door. Especially, FIG. 7 shows that the side-view and rearview apparatus according to the present disclosure is installed both of inside and outside the vehicle via the corner 100 while the left front door of the vehicle slightly opens

Since the side-view and rearview apparatus according to the present disclosure is installed both of inside and outside the left front door as shown in FIG. 7, external rain or snow or water should be prevented from invading the inner room of the vehicle. To this end, the glass slide portion 16 in a contact with the glass 20 of the front door, the door frame insertion portion 17 in a contact with the frame or finishing plate of the front door, and/or all of portions of the front door in a contact with the present side-view and rearview apparatus or drilled for fixation thereto should have moldings or rubber packing attached or bonded thereto, thereby achieving complete waterproof.

The monitor housing 11 forming the right portion of the body 10 has a cavity formed therein to receive the monitor 12. In a similar manner to the camera housing, the monitor housing 11 is constructed to be combined in a hinge manner so as to move in upper-lower, left-right and/or front-rear directions using a hand or an electrical mechanism. Accordingly, the monitor 12 changes its display direction. In one embodiment, operation buttons may be installed at an appropriate position to turn on/off the present side-view and rearview apparatus and/or to operate the camera and/or the monitor. The operation buttons may be connected to a control unit (not shown) embedded in the body 10.

The control unit use power supplied from a battery and allows an image obtained from the camera 14 to display on the monitor 12, and control turn-on/off of the present side-view and rearview apparatus, movement in left-right and/or front-rear directions of the camera housing 13 (thus, changing of the view direction of the camera 14), movement in left-right and/or front-rear directions of the monitor housing 11 (thus, changing of the display direction of the monitor 12), a brightness adjusting of the monitor 12, and/or the like. When the driver intends to change the display direction of the monitor 12, the driver manually pushes up/down or draws near/away the monitor housing 11 using the hinge installed at the monitor housing 11 or automatically moves the monitor housing 11 in left-right and/or front-rear directions using the electrical mechanism.

Hereinafter, the side-view and rearview apparatus for a vehicle according to the present disclosure will be described in terms of an operation method.

In order to use the present apparatus, the driver first turns on a turn on/off button to operate the present apparatus. Depending on settings, the present apparatus may be automatically turned on at the same time with the start of the vehicle. When the present apparatus starts to operate, the driver opens the window of the left front door to manually manipulate the camera housing 13 or automatically moves the camera 14 in up-down, left-right and/or front-rear directions via an electrical mechanism to change the view direction of the lens of the camera to obtain the view angle optimal to the driver.

Moreover, if necessary, the driver may move the monitor housing 11 via a hinge using a hand or an electrical mechanism in up-down, left-right and/or front-rear directions to change the display or tilt direction of the monitor 12 as suitable to the driver. After completion of all of the adjustments, the driver may drive the vehicle comfortably with carefully observing the rearview and side-view around the vehicle with more wide-range view angle by seeing the left and right monitors whenever necessary.

Particular features, structures, or characteristics described in connection with the embodiment are included in at least one embodiment of the present disclosure and not necessarily in all embodiments. Furthermore, the particular features, structures, or characteristics of any specific embodiment of the present disclosure may be combined in any suitable manner with one or more other embodiments or may be changed by those skilled in the art to which the embodiments pertain. Therefore, it is to be understood that contents associated with such combination or change fall within the spirit and scope of the present disclosure.

Although embodiments have been described with reference to a number of illustrative embodiments thereof, it should be understood that numerous other modifications and applications may be devised by those skilled in the art that will fall within the intrinsic aspects of the embodiments. More particularly, various variations and modifications are possible in concrete constituent elements of the embodiments. In addition, it is to be understood that differences relevant to the variations and modifications fall within the scope of the present disclosure defined in the appended claims.

## Claims

1. A vehicle with a side and rearview apparatus, the apparatus comprising:
a camera (14) to image a side-view and rearview around the vehicle; a monitor (12) to display the side-view and rearview from the camera; a control unit to enable the side-view and rearview from the camera to be displayed on the monitor; and a body (10) to accommodate the camera, monitor and control unit, the body being installed at the front portion of left and/or right front doors of the vehicle,
the vehicle being **characterized in that** the body (10) comprises a camera housing (13) and a monitor housing (11) to receive therein the camera (14) and monitor (12) respectively, wherein the camera housing (13) and the monitor housing (11) are disposed to sandwich the front door therebetween so that the camera housing (13) and the monitor housing (11) are located outside and inside the vehicle respectively.

2. The vehicle of claim 1, wherein the camera housing (13) has a lens hole for a lens of the camera to see through.

3. The vehicle of claim 1, wherein the camera and monitor housings (13, 11) are coupled to each other using a bolt and a nut or via a metal support plate (30) installed to a corner (100) in front of a glass window of the front door.

4. The vehicle of any one of claims 1 to 3, wherein the body (10) has a glass slide portion (16) formed between the camera and monitor housings (13, 11) to enable vertical sliding of a glass window of the front door.

5. The vehicle of any one of claims 1 to 3, wherein the camera and monitor housings (13, 11) independently move in up-down, left-right and/or front-rear directions via operation of a driver.

6. The vehicle of any one of claims 1 to 3, wherein the movement of the camera and monitor housings (13, 11) is realized via a hinge by a hand or an electrical mechanism.

7. The vehicle of any one of claims 1 to 3, wherein the camera housing (13) has a direction indication lamp formed at an outer cover thereof, and has an illumination lamp formed at a bottom face thereof.

8. The vehicle of claim 1, wherein the camera housing (13) and the monitor housing (11) are integrated to each other.

## Patentansprüche

1. Fahrzeug mit einem seitlichen und hinteren Rückspiegelgerät, wobei das Gerät Folgendes umfasst:
Eine Fernsehkamera (14) für die bildliche Darstellung der seitlichen und hinteren Ansicht um das Fahrzeug herum; einen Monitor (12) für die Anzeige der seitlichen und hinteren Ansicht der Fernsehkamera; eine Kontrolleinheit für die Sichtbarmachung der seitlichen und hinteren Ansicht der Fernsehkamera auf dem Monitor; und ein Gehäuse (10) für die Fernsehkamera, den Monitor und die Kontrolleinheit. Dieses Gehäuse befindet sich im vorderen Teil der linken und/oder rechten Vordertür des Fahrzeugs.
Das Fahrzeug ist **gekennzeichnet durch** die Tatsache, dass das Gehäuse (10) eine Aufnahme für die Fernsehkamera (13) und eine Aufnahme für den Monitor (11) umfasst, in welche die Fernsehkamera (14) und der Monitor (12) eingesetzt werden,
wobei die Fernsehkameraaufnahme (13) und die Monitoraufnahme (11) so angeordnet sind, dass sich die Vordertür dazwischen befindet, d.h. die Fernsehkameraaufnahme (13) und die Monitoraufnahme (11) befinden sich jeweils außen und innen vom Fahrzeug.

2. Fahrzeug laut Patentanspruch 1, wobei jedoch die Fernsehkameraaufnahme (13) eine Öffnung aufweist, damit die Linse der Fernsehkamera dadurch sehen kann.

3. Fahrzeug laut Patentanspruch 1, bei dem jedoch die Aufnahmen für Fernsehkamera und Monitor (13, 11) mittels Bolzen und Mutter oder einer metallischen Halteplatte (30) miteinander verbunden sind, die im Winkel (100) vor einer Glasscheibe der Vordertür angebracht ist.

4. Fahrzeug laut einem beliebigen Patentanspruch von 1 bis 3, in dem das Gehäuse (10) ein Teil mit einer verschiebbaren Glasscheibe (16) zwischen den Aufnahmen für Fernsehkamera und Monitor (13, 11) besitzt, um die vertikale Verschiebung einer Glasscheibe in der Vordertür zu ermöglichen.

5. Fahrzeug gemäß einer beliebigen der vorhergehenden Ansprüche 1 bis 3, wobei sich die Aufnahmen für Fernsehkamera und Monitor (13, 11) - durch die Betätigung des Fahrers - unabhängig nach oben-unten, links-rechts und/oder vor-zurück bewegen.

6. Fahrzeug gemäß einer beliebigen der vorhergehenden Ansprüche 1 bis 3, wobei die Bewegung der Aufnahmen für Fernsehkamera und Monitor (13, 11) durch ein Drehgelenk manuell oder durch eine elektrische Vorrichtung erfolgt.

7. Fahrzeug gemäß einer beliebigen der vorhergehenden Ansprüche 1 bis 3, wobei die Aufnahme der Fernsehkamera (13) eine Leuchtanzeige für die Richtung auf einer äußeren Abdeckung aufweist und ein Beleuchtungslicht auf der unteren Seite.

8. Fahrzeug gemäß Patentanspruch 1, wobei die Aufnahme der Fernsehkamera (13) mit der Aufnahme des Monitors (11) integriert ist.

## Revendications

1. Véhicule avec rétroviseur latéral et arrière, l'appareil comprend :
une caméra (14) qui capture la vue latérale et la vue arrière autour du véhicule ; un moniteur (12) qui montre la vue latérale et la vue arrière prises par la caméra ; une unité de commande permettant d'afficher sur le moniteur la vue latérale et la vue arrière prises par la caméra ; et un boîtier (10) contenant la caméra, le moniteur et l'unité de commande, ce boîtier ce trouve dans la partie avant de la porte avant gauche et/ou droite du véhicule,
le véhicule est doté d'un boîtier (10) prévoyant un logement pour la caméra (13) et un logement pour le moniteur (11) qui accueillent respectivement la caméra (14) et le moniteur (12),
le logement de la caméra (13) et le logement du moniteur (11) sont placés de sorte à intercaler entre eux la porte avant afin que le logement de la caméra (13) et le logement du moniteur (11) se trouvent respectivement à l'extérieur et à l'intérieur du véhicule.

2. Véhicule, selon la revendication 1, dont le logement de la caméra (13) est doté d'un trou à travers lequel la lentille de la caméra regarde vers l'extérieur.

3. Véhicule, selon la revendication 1, dont les logements de la caméra et du moniteur (13, 11) sont accouplés à l'aide d'un boulon et d'un écrou à travers une plaque de support métallique (30) placée dans un coin (100) devant une fenêtre en verre de la porte avant.

4. Véhicule, selon une revendication quelconque de 1 à 3, dont le boîtier (10) est doté d'une portion coulissante en verre (16) située entre les logements de la caméra et du moniteur (13, 11) pour permettre le glissement vertical d'une fenêtre en verre de la porte avant.

5. Véhicule, selon une revendication quelconque de 1 à 3, dont les logements de la caméra et du moniteur (13, 11) se déplacent de manière indépendante dans la direction haut-bas, gauche-droite et/ou avant-arrière par l'actionnement d'une commande.

6. Véhicule, selon une revendication quelconque de 1 à 3, dont le mouvement des logements de la caméra et du moniteur (13, 11) est réalisé par une charnière actionnée manuellement ou par un mécanisme électrique.

7. Véhicule, selon une revendication quelconque de 1 à 3, dont le logement de la caméra (13) est doté d'une lampe indiquant la direction qui est placée sur une face externe et d'une lampe d'éclairage qui est placée sur une face inférieure.

8. Véhicule, selon la revendication 1, dont le logement de la caméra (13) et le logement du moniteur (11) sont intégrés l'un dans l'autre.
